# FASCICULE DE BREVET EUROPEEN

(11) **EP 3 181 328 B1**
(45) Date de publication et mention de la délivrance du brevet: **12.09.2018**
(21) Numéro de dépôt: 16306679.8
(22) Date de dépôt: 14.12.2016
(51) Int. Cl.: B29C 49/78, B29C 49/64, B29C 49/06, B29K 67/00, B29L 31/00

(54) **INDEXATION ANGULAIRE D'UNE PREFORME CHAUFFEE NON UNIFORMEMENT PAR MESURE DE TEMPERATURE**
WINKELINDEXIERUNG EINER NICHT GLEICHMÄSSIG ERHITZTEN VORFORM DURCH TEMPERATURMESSUNG
ANGULAR INDEXING OF A PREFORM NOT UNIFORMLY HEATED BY MEASURING TEMPERATURE

(30) Priorité: 16.12.2015 FR 1562517
(43) Date de publication de la demande: 21.06.2017
(73) Titulaire: Sidel Participations, 76930 Octeville-sur-Mer (FR)
(72) Inventeur: FEUILLOLEY, Guy, 76930 Octeville-sur-mer (FR)
(74) Mandataire: Grassin d'Alphonse, Emmanuel Jean Marie

(56) Documents cités:
- EP-A1- 2 253 452
- US-A- 5 853 775
- US-A- 6 113 840
- US-A1- 2011 236 518
- US-A1- 2012 326 345

## Description

### DOMAINE TECHNIQUE DE L'INVENTION

L'invention concerne un procédé d'indexation d'une préforme chauffée selon un profil de chauffe préférentielle.

L'invention concerne plus particulièrement un procédé d'indexation d'une préforme présentant un corps tubulaire s'étendant selon un axe déterminé, au moins un tronçon du corps tubulaire ayant été préalablement chauffé non uniformément selon un profil circonférentiel de chauffe déterminé, le procédé comportant une opération de rotation de la préforme autour de son axe d'un angle d'indexation depuis une orientation angulaire aléatoire jusqu'à une orientation angulaire de référence déterminée en fonction du profil de chauffe. Les documents US5853775 et EP2253452A1 décrivent des procédés et des installations d'indexation d'une préforme selon l'état de l'art antérieur.

### ARRIERE PLAN TECHNIQUE DE L'INVENTION

Les préformes en matériau thermoplastique sont obtenues par moulage par injection. Les préformes présentent généralement un corps sensiblement axisymétrique à paroi tubulaire épaisse qui est fermé à l'une de ses extrémités axiales par un fond à paroi épaisse, et qui est prolongé à son autre extrémité par un col, lui aussi tubulaire. Le col est conformé à sa forme et à ses dimensions définitives tandis que le corps de la préforme est appelé à subir une déformation relativement importante pour former un récipient final lors d'une étape de formage.

Lors d'une étape intermédiaire de chauffage, le corps de la préforme est rendu malléable par chauffage au-delà d'une température de transition vitreuse. Pour une préforme réalisée en polyéthylène téréphtalate (PET), la température de transition vitreuse est d'environ 70°C.

Ensuite, lors de l'étape de formage, la préforme ainsi chauffée est placée dans un moule qui présente une empreinte de moulage conforme au récipient final. Un fluide sous pression, tel que de l'air, est alors injecté dans le corps malléable de la préforme afin d'en plaquer la paroi contre l'empreinte du moule.

Traditionnellement, le corps de la préforme est chauffé de manière homogène lors de l'étape de chauffage. De ce fait, il subit une expansion qui est homogène dans toutes les directions radiales.

Le moule est généralement maintenu à une température froide relativement à celle de la préforme. Ainsi, lorsque la paroi de la préforme entre en contact avec le moule, elle est refroidie brutalement de manière à être figée.

Ce phénomène de refroidissement rend difficile la réalisation de récipients, notamment des bouteilles, présentant une section transversale qui n'est pas approximativement axisymétrique par rapport à l'axe du col à partir de la préforme. Il s'agit par exemple des récipients de section transversale polygonale dans lesquels chaque face approximativement plane s'écarte sensiblement d'une surface cylindrique enveloppant les arêtes, ou des récipients à section ovale tels que les flacons pour produits lessiviels.

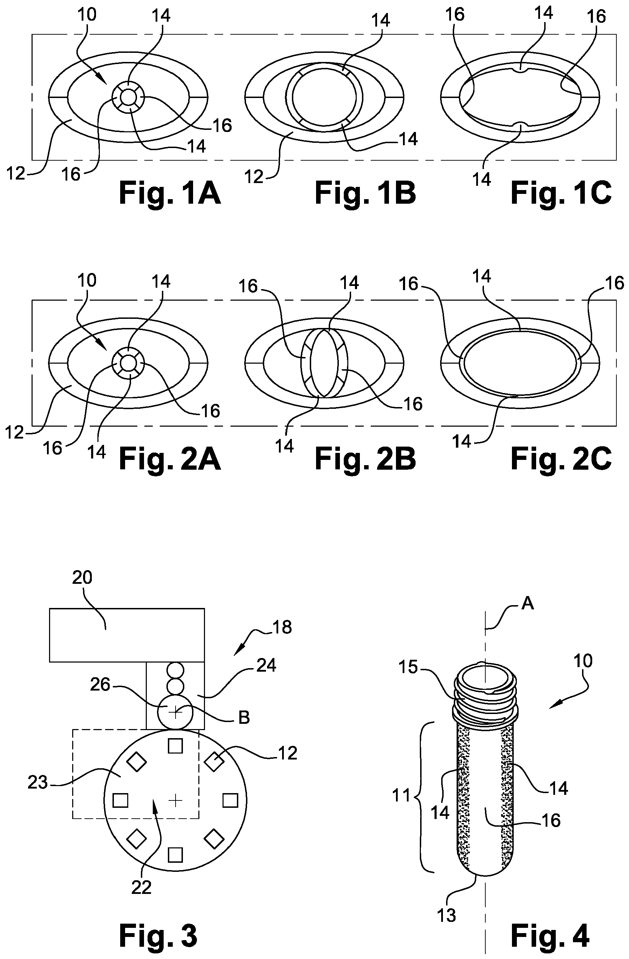

Ce dernier cas est illustré aux figures 1A à 1C. On a ainsi représenté en section transversale le corps d'une préforme 10 qui est agencé dans un moule 12. Le corps de la préforme 10 est chauffé de manière homogène.

Du fait de la section de forme ovale du récipient final, certaines portions 14 proximales de la préforme 10 sont agencées radialement à proximité de l'empreinte du moule 12, tandis que d'autres portions 16 distales de la préforme 10 sont relativement plus éloignées radialement de l'empreinte du moule 12.

Comme illustré à la figure 1B, l'injection du fluide sous pression dans le corps de la préforme 10, chauffé de manière homogène, provoque une expansion homogène du corps dans toutes les directions radiales. Cependant, les portions 14 proximales entrent en contact avec le moule 12 avant les portions 16 distales. Les portions 14 proximales sont donc figées dans un état d'étirement bien moins important que les portions 16 distales.

Du fait que le chauffage homogène confère au matériau les mêmes caractéristiques d'étirement quelles que soient les portions 14, 16 du corps de la préforme 10, l'étirement supérieur des portions 16 distales du corps de la préforme 10 s'accompagne d'un amincissement accru de cette portion 16 de paroi. Comme cela est représenté à la figure 1C, on obtient, finalement, un récipient à paroi d'épaisseur non constante, plus mince dans les portions 16 distales du corps de la préforme 10 de départ et plus épaisse dans les portions 14 proximales de la préforme 10 de départ.

Ceci entraîne de nombreux inconvénients qui sont cités dans le document FR-A1-2.703.944.

On a déjà proposé un procédé, notamment dans ledit document FR-A1-2.703.944, pour obtenir un récipient de section non symétrique de révolution à paroi d'épaisseur homogène obtenu par soufflage ou étirage-soufflage.

Ce document propose de chauffer les portions 14 proximales du corps de la préforme 10 à une température supérieure à celle des portions 16 distales, sans toutefois atteindre la température de cristallisation du matériau. Par la suite, les portions 14 proximales seront donc appelées "portions 14 surchauffées". Le corps de la préforme 10 est ainsi chauffé de manière non uniforme.

Comme illustré aux figures 2A à 2C, un tel procédé, appelé couramment "procédé de chauffe préférentielle", permet de conférer aux portions 14 surchauffées des caractéristiques mécaniques permettant un étirage, notamment circonférentiel, plus rapide par rapport aux portions 16 distales moins chaudes. Par exemple, les portions 14 surchauffées présentent une plus grande élasticité que celle des portions 16 distales.

La forme et la répartition des portions 14 surchauffées et des portions distales définissent un profil circonférentiel de chauffe de la préforme. Le profil de chauffe est adapté en fonction de la forme du récipient final à obtenir.

Comme illustré à la figure 2B, lorsque le fluide sous pression est injecté dans le corps de la préforme 10, les portions 14 surchauffées sont étirées plus rapidement que les portions 16 distales sous l'effet de la pression du fluide. Ainsi, à l'instant où les portions 14 surchauffées entrent en contact avec le moule 12, elles présentent une épaisseur inférieure à celle des portions 16 distales.

Les portions 14 surchauffées sont alors refroidies et figées dans leur état, permettant d'étirer progressivement le reste du corps de la préforme 10 jusqu'à épouser l'empreinte du moule 12. En réglant la température de chaque portion 14, 16, cela permet d'obtenir un récipient final à paroi d'épaisseur homogène, comme représenté à la figure 2C.

Bien entendu, pour obtenir un récipient final satisfaisant, il est nécessaire d'indexer l'orientation angulaire de la préforme autour de son axe principal par rapport au moule afin d'orienter correctement les portions surchauffées vers les portions proximales correspondantes de l'empreinte du moule.

A cet effet, il est connu de réaliser des préformes avec un col pourvu d'un relief approprié qui est utilisé pour procurer la bonne orientation de la préforme chauffée par butée mécanique contre un élément d'indexation. Dans ce cas, l'opération préalable de chauffage de la préforme est réalisée en tenant compte de la position dudit relief.

Néanmoins un tel procédé d'indexation par butée mécanique n'est pas satisfaisant car il requiert d'utiliser du matériau thermoplastique supplémentaire pour réaliser le relief du col. Or, on cherche actuellement à réaliser des récipients utilisant aussi peu de matériau thermoplastique que possible afin de limiter les coûts de fabrication des récipients et de réduire leur poids.

Un tel procédé d'indexation par butée mécanique impose de plus de disposer de moyens de transport des préformes dans une station de chauffage qui soient équipés de moyens d'indexation de la préforme.

### BREF RESUME DE L'INVENTION

L'invention propose un procédé d'indexation tel que décrit précédemment, caractérisé en ce que l'angle d'indexation est déterminé lors d'une opération préalable de détermination par détection de la position angulaire d'au moins une valeur caractéristique de température sur au moins un secteur angulaire de la circonférence d'au moins un tronçon du corps de la préforme lorsque la préforme est portée par un organe de support, la détection étant réalisée par des moyens de mesure de température.

Selon d'autres caractéristiques du procédé réalisé selon les enseignements de l'invention :
- les moyens de mesure de température sont aptes à mesurer la température sans contact direct avec la préforme ;
- les moyens de mesure de température comportent au moins une caméra thermique ;
- les moyens de mesure de la température comportent au moins un thermomètre, notamment un pyromètre ;
- la préforme et les moyens de mesure de température sont susceptibles de tourner autour de l'axe de la préforme relativement l'un par rapport à l'autre afin d'exposer un secteur angulaire suffisamment grand pour obtenir la ou les valeurs de température caractéristique du profil de chauffe ;
- la préforme est entraînée en rotation par rapport à l'organe de support pendant l'opération de détermination entre une orientation angulaire initiale et l'orientation angulaire aléatoire ;
- chaque valeur caractéristique de température est formée par un extremum de température.

L'invention concerne aussi un dispositif d'indexation d'une préforme pour la mise en oeuvre du procédé réalisé selon les enseignements de l'invention, caractérisé en ce qu'il comporte au moins un organe de support d'une préforme et des moyens mesure de la température à distance.

Selon d'autres caractéristiques du dispositif d'indexation :
- l'organe de support est entraîné en déplacement pour permettre le transport de la préforme ;
- les moyens de mesure de la température sont fixes par rapport à la trajectoire de l'organe de support ;
- les moyens de mesure de la température sont mobiles conjointement avec l'organe de support ;
- les moyens de mesure de la température comportent une caméra thermique.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- les figures 1A, 1B et 1C représentent différents état d'expansion d'une préforme lors d'une étape de formage appartenant à un procédé réalisé selon l'état de la technique sans chauffe préférentielle ;
- les figures 2A, 2B et 2C sont des vues similaires à celles des figures 1A, 1B, 1C qui représentent différents états d'expansion d'une préforme lors d'une étape de formage appartenant à un procédé réalisé avec chauffe préférentielle ;
- la figure 3 est une vue de dessus qui représente très schématiquement une installation de fabrication de récipients comportant un dispositif d'indexation mettant en oeuvre le procédé d'indexation réalisé selon les enseignements de l'invention ;
- la figure 4 est une vue en perspective qui représente une préforme dont le corps a été chauffé selon un profil de chauffe déterminé ;
- la figure 5 est un diagramme polaire qui représente la température de la face externe des parois de la préforme de la figure 4 en fonction de la position angulaire autour de l'axe de la préforme ;
- la figure 6 est une vue de dessus qui représente schématiquement le dispositif d'indexation comportant une roue de transfert équipée d'une caméra thermique ;
- la figure 7 est une vue de détail en perspective qui représente la caméra thermique de la figure 6 et une préforme portée par un organe de support de la roue de transfert ;
- la figure 8 est une reproduction schématique d'une image de la préforme de la figure 4 obtenue par la caméra thermique ;
- la figure 9 est une vue en section radiale de la préforme de la figure 4 qui est portée par un organe de support du dispositif d'indexation ;
- la figure 10 est un diagramme qui représente la température de la paroi externe d'un tronçon de la préforme de la figure 4 en fonction de sa position angulaire autour de l'axe "A" de la préforme.

### DESCRIPTION DETAILLEE DES FIGURES

Dans la suite de la description, des éléments présentant une structure identique ou des fonctions analogues seront désignés par des mêmes références.

Dans la suite de la description, on adoptera de manière non limitative des orientations axiale, radiale et circonférentielle qui sont déterminées par rapport à l'axe "A" de la préforme 10 ou par rapport à l'axe "B" de la roue de transfert.

On a représenté très schématiquement à la figure 3 une installation 18 de production de récipients finaux à partir de récipients à l'état d'ébauche, appelés par la suite préformes 10, par formage, et notamment par soufflage ou étirage-soufflage.

Un exemple de préforme 10 a été représenté à la figure 4. La préforme 10 présente un corps 11 sensiblement axisymétrique d'axe "A" à paroi tubulaire épaisse qui est fermé à son extrémité axiale inférieure par un fond 13 à paroi épaisse, et qui est prolongé à son autre extrémité supérieure par un col 15, lui aussi tubulaire. Le col 15 est conformé à sa forme et à ses dimensions définitives tandis que le corps 11 de la préforme 10 est appelé à subir une déformation relativement importante pour former un récipient final lors de l'étape de formage. Le col 15 est ici dénué de relief d'indexation.

L'installation 18 permet ici de produire des récipients finaux en grande série par circulation continue des préformes 10 à travers les stations de traitement successives. Elle comporte une station 20 de chauffage qui est susceptible de réaliser une opération préalable de chauffe préférentielle au cours de laquelle le corps 11 des préformes 10 est chauffé de manière non uniforme selon un profil circonférentiel de chauffe déterminé, comme cela a été expliqué en préambule. Il s'agit ici d'une station 20 de chauffage comportant un tunnel de chauffage (non représenté) qui est parcouru par des organes de transport de préformes, tels que des mandrins.

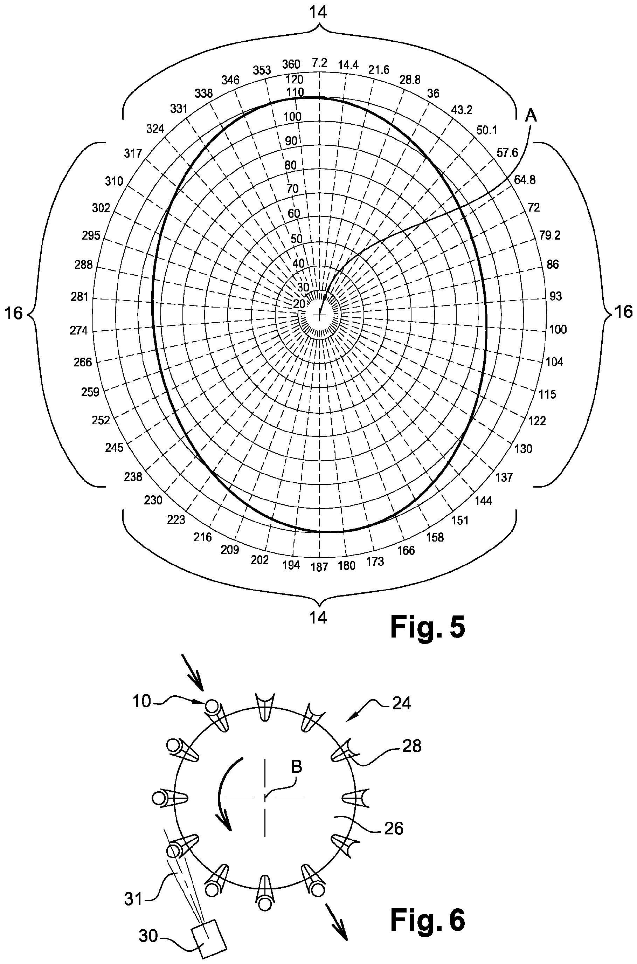

Un exemple de profil de chauffe a été représenté aux figures 4 et 5. Plus particulièrement, la figure 5 est un diagramme polaire qui représente la température de la face externe de la préforme sur un tronçon du corps 11 de la préforme 10 en fonction de la position angulaire de chaque point dudit tronçon autour de l'axe "A" de la préforme 10. Le corps 11 de la préforme 10 est chauffé de manière identique sur toute sa hauteur. Le profil de chauffe présente, en section radiale, deux portions 14 diamétralement opposées du corps 11 de la préforme 10 qui sont surchauffées, ici à une température de plus de 100°C tandis que deux portions 16 diamétralement opposées et décalées de 90° autour de l'axe "A" par rapport aux portions 14 surchauffées, sont chauffées à une température inférieure à celle des portions 14 surchauffées, mais toutefois supérieure à la température de transition vitreuse du matériau constitutif de la préforme.

L'installation 18 comporte aussi une station 22 de formage qui est équipée de moules 12 comme cela est expliqué en préambule. Chaque moule 12 est associé à une tuyère (non représentée) de soufflage qui est susceptible d'injecter de l'air comprimé dans les préformes préalablement chauffées par la station 20 de chauffage. Il s'agit ici d'une station 22 de formage qui est équipée d'un carrousel 23 muni d'une pluralité de moules 12 régulièrement répartis à sa périphérie.

Comme expliqué en préambule, avant l'opération de formage, il est nécessaire que la préforme 10 occupe, dans le moule 12, une orientation angulaire de référence mettant en correspondance le profil de chauffe avec la forme de l'empreinte du moule. En d'autres termes, les portions 14 surchauffées de la préforme 10 sont agencées radialement à proximité de l'empreinte du moule 12, tandis que les portions 16 moins chaudes de la préforme 10 sont relativement plus éloignées radialement de l'empreinte du moule 12.

A cet effet, l'installation 18 comporte un dispositif 24 d'indexation des préformes 10 qui est interposé entre la station 20 de chauffage et la station 22 de formage. Le dispositif 24 d'indexation est plus particulièrement agencé directement en amont de la station 22 de formage pour éviter que les préformes 10 ne subissent des décalages angulaires non maîtrisés au cours d'opération de transfert intermédiaires.

Comme représenté plus en détails à la figure 6, le dispositif 24 d'indexation comporte une roue 26 de transfert rotative autour d'un axe "B". La roue 26 de transfert est munie d'au moins un organe 28 de support individuel d'une préforme 10 à sa périphérie. Le dispositif 24 d'indexation comporte plus particulièrement une pluralité d'organes 28 de support qui sont répartis régulièrement à sa périphérie.

La roue 26 de transfert entraîne les organes 28 de support le long d'une trajectoire circulaire durant sa rotation. Le dispositif 24 d'indexation est ainsi susceptible de transporter les préformes 10 jusqu'à la station 22 de formage, comme indiqué par les flèches, tout en permettant leur indexation. Les préformes 10 parcourent ainsi une trajectoire en arc de cercle entre un point de chargement sur la roue 26 de transfert et un point de déchargement de la roue 26 de transfert.

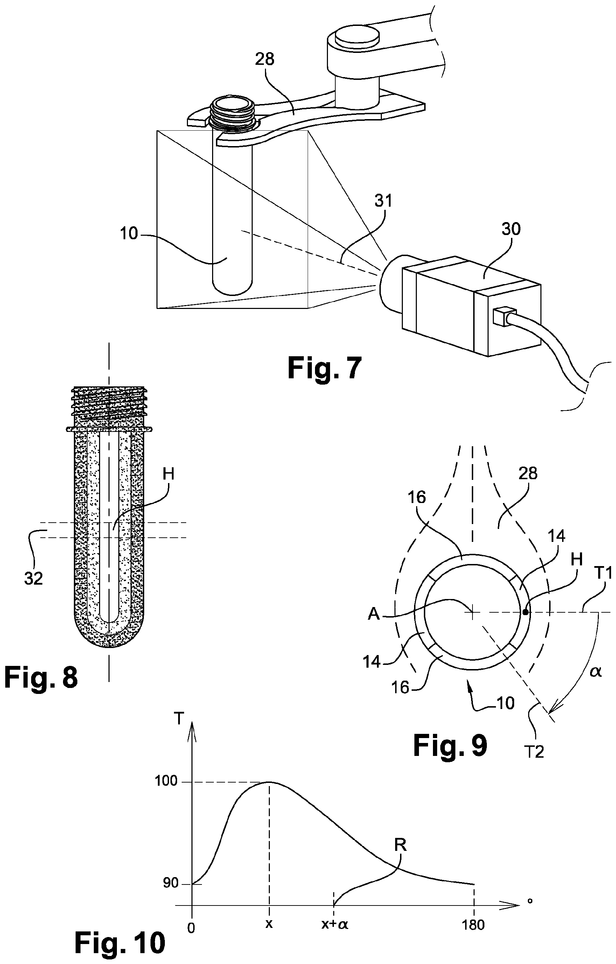

Un exemple d'un tel organe 28 de support est représenté plus en détails à la figure 7. Il s'agit ici d'une pince qui est susceptible de saisir la préforme 10 par son col 15.

Le dispositif 24 d'indexation comporte des moyens 30 de mesure à distance de la température du corps 11 de la préforme. Les moyens de mesure de température sont ainsi aptes à mesurer la température sans contact direct avec la préforme 10.

Dans l'exemple illustré, lesdits moyens 30 sont une caméra 30 thermique qui permet d'obtenir une image de la préforme 10 dans le domaine de l'infrarouge mettant en évidence les différences de températures entre les différents points du corps 11 de la préforme.

La caméra 30 thermique est agencée de manière fixe à côté de la roue 26 de transfert rotative. Une ligne 31 de mire de la caméra 30 thermique est ainsi pointée sur une zone déterminée de la trajectoire des préformes 10 de manière à prendre une image de côté du corps 11 de la préforme 10. Comme cela est représenté à la figure 8, l'image permet de distinguer les points les plus chauds du corps 11 qui sont ici indiqués en blanc, et les points les plus froids qui sont ici indiqués en grisé foncé.

Comme représenté à la figure 6, la caméra 30 thermique est ici orientée de manière à prendre une image tangentiellement à la trajectoire des préformes 10. Cette orientation particulière de la caméra 30 thermique permet d'obtenir une image très nette du fait que la préforme 10 demeure sensiblement plus longtemps dans sa ligne de mire par rapport à d'autres orientations de la caméra 30 thermique.

En variante non représentée de l'invention, la caméra 30 thermique est orientée en direction de l'axe de rotation de la roue de manière à prendre une image orthogonalement à la trajectoire de déplacement des préformes. Une telle orientation permet tout de même d'obtenir une image satisfaisante tant que la vitesse de défilement des préformes n'est pas trop élevée par rapport à la sensibilité de la caméra 30 thermique.

La caméra 30 thermique est agencée de manière à prendre une image faisant apparaître un secteur angulaire d'environ 180° du corps 11 de la préforme 10, c'est-à-dire la face visible de la préforme 10 vue de côté. Les profils de chauffe présentent généralement une symétrie axiale. Ainsi, à partir d'une telle image, il est aisé de déduire l'orientation du profil de chauffe.

Néanmoins, pour des profils de chauffe inhabituels ne présentant pas une telle symétrie, on pourra prévoir que la préforme 10 et la caméra 30 thermique sont susceptibles de tourner autour de l'axe "A" de la préforme 10 relativement l'un par rapport à l'autre afin d'exposer un secteur angulaire supérieur à 180° qui soit suffisamment grand pour obtenir la ou les valeurs de température caractéristique du profil de chauffe, comme cela sera expliqué par la suite. Cela peut par exemple être obtenu en munissant l'organe 28 de support d'un galet moteur frottant contre la préforme 10 pour provoquer sa rotation maîtrisée autour de son axe "A" par rapport à l'organe 28 de support, la caméra 30 thermique restant fixe. On obtient ainsi une image panoramique qui permet de capturer un secteur angulaire de la préforme 10 supérieur à 180°.

En variante, pour des profils de chauffe inhabituels ne présentant pas une telle symétrie, on pourra prévoir plusieurs moyens de mesure, par exemple des caméras thermiques, positionnés de manière à déterminer la température du corps de la préforme en deux points décalés circonférentiellement. Par exemple, s'agissant de deux caméras thermiques, la première caméra est agencée de manière à prendre une image d'une première moitié de la préforme, tandis que l'autre caméra est agencée de manière à prendre une image de l'autre moitié de la préforme. Il est ainsi possible d'obtenir le profil de température complet de la préforme sans prévoir de moyens de rotation de la préforme par rapport aux caméras.

Selon une variante non représentée de l'invention, chaque organe de support est associé avec un moyen de mesure de la température. Les moyens de mesure sont ainsi mobiles conjointement avec l'organe de support associé.

Selon une autre variante non représentée de l'invention, les moyens de mesure sont formés par un thermomètre infrarouge ou par un pyromètre qui permettent de mesurer la température du corps de la préforme sur une zone ponctuelle déterminée. La préforme et le thermomètre sont susceptibles de tourner autour de l'axe de la préforme relativement l'un par rapport à l'autre afin de relever des mesures de températures successives le long d'un secteur angulaire suffisamment grand de la préforme pour obtenir à coup sûr la ou les valeurs de température caractéristique du profil de chauffe. Comme expliqué précédemment, pour le profil de chauffe des figures 4 et 5, un secteur angulaire de 180° permet d'obtenir à coup sûr les valeurs de température caractéristiques.

On décrit à présent le procédé d'indexation de la préforme 10 chauffée non uniformément selon un profil circonférentiel de chauffe déterminé, le procédé mettant en oeuvre le dispositif 24 d'indexation précédemment décrit.

La préforme 10 n'est pas indexée lors de son passage dans la station 20 de chauffage. Ainsi, lorsque la préforme 10 est prise en charge par l'organe 28 de support du dispositif 24 d'indexation après sa sortie de la station 20 de chauffage, la préforme 10 occupe une orientation angulaire aléatoire indépendante du profil de chauffe.

Le transfert de la préforme 10 depuis la roue 26 de transfert du dispositif 24 d'indexation jusqu'au moule 12 est suffisamment maîtrisé pour permettre de connaître l'orientation angulaire de référence que la préforme 10 devrait occuper sur l'organe 28 de support pour que le profil de chauffe soit orienté correctement dans le moule 12 après le transfert de la préforme 10. Le procédé d'indexation propose de déterminer un angle "a" d'indexation duquel il faudrait tourner la préforme 10 à partir de sa position angulaire aléatoire afin qu'elle occupe son orientation angulaire de référence dans le moule 12 avant l'étape de formage.

En se reportant à la figure 9, on a représenté la préforme 10 dans son orientation angulaire aléatoire. La position angulaire du point "H" le plus chaud de la portion 14 surchauffée visible par la caméra 30 thermique a été matérialisée par un premier rayon "T1" pointillé. Un deuxième rayon "T2" pointillé montre l'orientation que devrait avoir ledit premier trait "T1" pour que ce point "H" le plus chaud soit dans une position angulaire conforme à l'orientation angulaire de référence de la préforme 10.

Un tel procédé d'indexation comporte une première opération préalable de détermination de l'angle "a" d'indexation qui est mise en oeuvre lorsque la préforme 10 est prise en charge par le dispositif 24 d'indexation. Cette opération consiste à détecter la position angulaire d'au moins une valeur caractéristique de température sur au moins un secteur angulaire de la circonférence d'au moins un tronçon 32 déterminé du corps 11 de la préforme 10 lorsque celle-ci est portée par l'organe 28 de support, comme cela est représenté à la figure 8.

Chaque valeur caractéristique de température est formée par un extremum de température. Le procédé consiste ainsi à rechercher les températures les plus élevées et/ou les températures les plus basses sur un secteur angulaire donné du tronçon 32 déterminé de la préforme 10.

Le tronçon 32 déterminé est par exemple agencé dans une zone axialement médiane du corps 11 car c'est à cet endroit que les différences de température sont les plus amples entre les minima et les maxima de température.

S'agissant d'un profil tel qu'indiqué à la figure 5, le secteur angulaire est ici idéalement de 180°. Un tel secteur angulaire permet de détecter au moins un maximum et au moins un minimum de température sur le secteur angulaire sélectionné, quelle que soit l'orientation angulaire aléatoire de la préforme 10.

Comme représenté à la figure 8, la caméra 30 thermique permet d'obtenir une image du corps 11 dans le domaine de l'infrarouge lorsque la trajectoire de la préforme 10 coupe la ligne de mire de la caméra 30. Cette image est ensuite analysée par une unité électronique de commande (non représentée) équipant l'installation 18. L'unité électronique de commande analyse le contenu de l'image à la hauteur du tronçon 32 déterminé. Elle en déduit une courbe, telle que représentée à la figure 10, qui fait apparaître au moins un minimum et au moins un maximum de température en fonction de sa position angulaire sur la préforme 10.

La position angulaire de ces extrema de température sur la préforme 10 sont déterminés en fonction de leur éloignement par rapport à l'axe "A" de la préforme 10. La caméra 30 est en effet agencée de manière à connaître précisément l'angle sous lequel est prise l'image par rapport à l'organe 28 de support.

Le profil de chauffe étant symétrique axialement, il est alors aisé de déterminer l'angle "a" d'indexation duquel la préforme doit être pivotée pour occuper son orientation angulaire de référence en partant de l'orientation angulaire aléatoire. Ceci est réalisé en calculant le décalage entre la position angulaire aléatoire du ou des extrema de température et la position angulaire "R" qu'ils devraient occuper si la préforme 10 étaient dans son orientation angulaire de référence, comme cela est par exemple représenté à la figure 10.

Le procédé comporte ainsi une opération ultérieure de rotation de la préforme autour de son axe dudit angle "a" d'indexation déterminé précédemment depuis son orientation angulaire aléatoire jusqu'à l'orientation angulaire de référence déterminée en fonction du profil de chauffe.

La rotation de la préforme est effectuée par des moyens d'entraînement en rotation de la préforme 10 autour de son axe "A" qui sont asservis à l'unité électronique de commande.

Cette opération de rotation est par exemple réalisée après le transfert de la préforme 10 dans le moule 12, avant l'opération de formage, c'est-à-dire avant l'introduction du fluide sous pression dans la préforme. A cet effet, le moule 12 est associé à une tuyère rotative (non représentée) autour de son axe de manière à entraîner la préforme en rotation lorsqu'elle est abaissée en contact avec le col de la préforme 10. Une telle tuyère rotative est décrite plus en détails dans le document de brevet FR-A1-2.804.059, cependant, la tuyère entraîne ici la préforme 10 en rotation par frottement puisque la préforme 10 est dénuée de relief d'indexation.

En variante non représentée de l'invention, l'opération de rotation est effectuée directement sur l'organe de support, par exemple au moyen de galets motorisés qui sont portés par l'organe de support et qui sont engagés par friction avec la préforme.

Selon une variante non représentée du procédé, lorsque les moyens de mesure de température sont formés par un dispositif susceptible de prendre la température en une zone ponctuelle de la préforme, par exemple un thermomètre ou un pyromètre, l'opération de détermination de l'angle "a" d'indexation s'accompagne d'une rotation de la préforme autour de son axe depuis une orientation angulaire initiale jusqu'à une orientation angulaire aléatoire. L'angle de rotation entre ces deux orientations angulaires est égale à l'angle du secteur déterminé de la préforme sur lequel les valeurs caractéristiques de température sont recherchées. Cette rotation permet de relever une suite de mesures régulièrement réparties le long du secteur angulaire. Cette suite de mesures permet de localiser les valeurs caractéristiques de température sur le secteur angulaire pour déterminer l'angle "a" d'indexation. La préforme est ensuite pivotée de son angle "a" d'indexation depuis la position angulaire aléatoire atteinte à la fin de l'opération de détermination.

Le procédé d'indexation réalisé selon les enseignements de l'invention permet avantageusement d'éviter de disposer de butées mécaniques pour indexer angulairement les préformes.

Ceci permet d'une part d'économiser du matériau thermoplastique pour réaliser un récipient final.

D'autre part, un tel procédé permet d'adapter une même installation à de nombreux profils de chauffe différents sans avoir à modifier structurellement les différents organes de support ou de transport de préformes. Notamment, aucune contrainte d'indexation n'est requise au niveau de la station de chauffage.

## Revendications

1. Procédé d'indexation d'une préforme (10) présentant un corps (11) tubulaire s'étendant selon un axe (A) déterminé, au moins un tronçon du corps (11) tubulaire ayant été préalablement chauffé non uniformément selon un profil circonférentiel de chauffe déterminé, le procédé comportant une opération de rotation de la préforme (10) autour de son axe d'un angle (a) d'indexation depuis une orientation angulaire aléatoire jusqu'à une orientation angulaire de référence déterminée en fonction du profil de chauffe,
**caractérisé en ce que** l'angle (a) d'indexation est déterminé lors d'une opération préalable de détermination par détection de la position angulaire d'au moins une valeur caractéristique de température sur au moins un secteur angulaire de la circonférence d'au moins un tronçon (32) du corps (11) de la préforme lorsque la préforme (10) est portée par un organe (28) de support, la détection étant réalisée par des moyens (30) de mesure de température.

2. Procédé selon la revendication précédente, **caractérisé en ce que** les moyens (30) de mesure de température sont aptes à mesurer la température sans contact direct avec la préforme (10).

3. Procédé selon la revendication précédente, **caractérisé en ce que** les moyens de mesure de température comportent au moins une caméra (30) thermique.

4. Procédé selon la revendication 1, **caractérisé en ce que** les moyens de mesure de la température comportent au moins un thermomètre, notamment un pyromètre.

5. Procédé selon l'une quelconque des revendications précédentes, **caractérisé en ce que** la préforme (10) et les moyens (30) de mesure de température sont susceptibles de tourner autour de l'axe (A) de la préforme (10) relativement l'un par rapport à l'autre afin d'exposer un secteur angulaire suffisamment grand pour obtenir la ou les valeurs de température caractéristique du profil de chauffe.

6. Procédé selon l'une quelconque des revendications précédentes, **caractérisé en ce que** la préforme (10) est entraînée en rotation par rapport à l'organe de support pendant l'opération de détermination entre une orientation angulaire initiale et l'orientation angulaire aléatoire.

7. Procédé selon l'une quelconque des revendications précédentes, **caractérisé en ce que** chaque valeur caractéristique de température est formée par un extremum de température.

8. Dispositif (24) d'indexation d'une préforme pour la mise en oeuvre du procédé selon l'une quelconque des revendications précédentes, **caractérisé en ce qu'**il comporte au moins un organe (28) de support d'une préforme (10) et des moyens (30) mesure de la température à distance.

9. Dispositif (24) selon la revendication précédente, **caractérisé en ce que** l'organe (28) de support est entraîné en déplacement pour permettre le transport de la préforme (10).

10. Dispositif (24) selon la revendication précédente **caractérisé en ce que** les moyens (30) de mesure de la température sont fixes par rapport à la trajectoire de l'organe (28) de support.

11. Dispositif (24) selon la revendication 9, **caractérisé en ce que** les moyens de mesure de la température sont mobiles conjointement avec l'organe de support.

12. Dispositif (24) selon l'une quelconque des revendications précédentes, **caractérisé en ce que** les moyens de mesure de la température comportent une caméra (30) thermique.

## Patentansprüche

1. Verfahren zur Indexierung einer Vorform (10), welche einen rohrförmigen Körper (11) aufweist, der sich entlang einer bestimmten Achse (A) erstreckt, wobei wenigstens ein Abschnitt des rohrförmigen Körpers (11) zuvor nicht gleichmäßig gemäß einem bestimmten umfangsmäßigen Erwärmungsprofil erwärmt worden ist, wobei das Verfahren einen Arbeitsschritt der Drehung der Vorform (10) um ihre Achse um einen Indexierungswinkel (α) ausgehend von einer zufälligen Winkelausrichtung bis zu einer in Abhängigkeit von dem Erwärmungsprofil bestimmten Referenz-Winkelausrichtung umfasst,
**dadurch gekennzeichnet, dass** der Indexierungswinkel (α) in einem vorausgehenden Arbeitsschritt der Bestimmung durch Detektion der Winkelposition wenigstens eines charakteristischen Temperaturwertes auf wenigstens einem Winkelsektor des Umfangs wenigstens eines Teilabschnitts (32) des Körpers (11) der Vorform bestimmt wird, wenn die Vorform (10) von einem Stützorgan (28) getragen wird, wobei die Detektion von Mitteln (30) zur Temperaturmessung durchgeführt wird.

2. Verfahren nach dem vorhergehenden Anspruch, **dadurch gekennzeichnet, dass** die Mittel (30) zur Temperaturmessung geeignet sind, die Temperatur ohne direkten Kontakt mit der Vorform (10) zu messen.

3. Verfahren nach dem vorhergehenden Anspruch, **dadurch gekennzeichnet, dass** die Mittel zur Temperaturmessung wenigstens eine Wärmebildkamera (30) umfassen.

4. Verfahren nach Anspruch 1, **dadurch gekennzeichnet, dass** die Mittel zur Temperaturmessung wenigstens ein Thermometer umfassen, insbesondere ein Pyrometer.

5. Verfahren nach einem der vorhergehenden Ansprüche, **dadurch gekennzeichnet, dass** die Vorform (10) und die Mittel (30) zur Temperaturmessung in der Lage sind, sich relativ zueinander um die Achse (A) der Vorform (10) zu drehen, um einen Winkelsektor zu exponieren, der genügend groß ist, um den oder die charakteristischen Temperaturwert(e) des Erwärmungsprofils zu erhalten.

6. Verfahren nach einem der vorhergehenden Ansprüche, **dadurch gekennzeichnet, dass** die Vorform (10) in Bezug auf das Stützorgan während des Arbeitsschrittes der Bestimmung zwischen einer anfänglichen Winkelausrichtung und der zufälligen Winkelausrichtung drehend angetrieben wird.

7. Verfahren nach einem der vorhergehenden Ansprüche, **dadurch gekennzeichnet, dass** jeder charakteristische Temperaturwert von einem Temperaturextrem gebildet wird.

8. Vorrichtung (24) zur Indexierung einer Vorform für die Durchführung des Verfahrens nach einem der vorhergehenden Ansprüche, **dadurch gekennzeichnet, dass** sie wenigstens ein Stützorgan (28) für eine Vorform (10) und Mittel (30) zur Fernmessung der Temperatur umfasst.

9. Vorrichtung (24) nach dem vorhergehenden Anspruch, **dadurch gekennzeichnet, dass** das Stützorgan (28) verschiebend angetrieben wird, um den Transport der Vorform (10) zu ermöglichen.

10. Vorrichtung (24) nach dem vorhergehenden Anspruch, **dadurch gekennzeichnet, dass** die Mittel (30) zur Messung der Temperatur bezüglich der Trajektorie des Stützorgans (28) feststehend sind.

11. Vorrichtung (24) nach Anspruch 9, **dadurch gekennzeichnet, dass** die Mittel zur Messung der Temperatur zusammen mit dem Stützorgan beweglich sind.

12. Vorrichtung (24) nach einem der vorhergehenden Ansprüche, **dadurch gekennzeichnet, dass** die Mittel zur Messung der Temperatur eine Wärmebildkamera (30) umfassen.

## Claims

1. Method for indexing a preform (10) having a tubular body (11) extending along a determined axis (A), at least one portion of the tubular body (11) having previously been heated non-uniformly according to a determined circumferential heating profile, the method comprising an operation of rotating the preform (10) about its axis through an indexing angle (α) from a random angular orientation to a determined reference angular orientation according to the heating profile,
**characterized in that** the indexing angle (α) is determined during a prior determination operation by detecting the angular position of at least one characteristic temperature value on at least one angular sector of the circumference of at least one portion (32) of the body (11) of the preform when the preform (10) is being held by a support member (28), detection being performed by temperature measurement means (30).

2. Method according to the preceding claim, **characterized in that** the temperature measurement means (30) are able to measure the temperature without direct contact with the preform (10).

3. Method according to the preceding claim, **characterized in that** the temperature measurement means comprise at least one thermal camera (30).

4. Method according to Claim 1, **characterized in that** the temperature measurement means comprise at least one thermometer, notably a pyrometer.

5. Method according to any one of the preceding claims, **characterized in that** the preform (10) and the temperature measurement means (30) are capable of revolving about the axis (A) of the preform (10) relative to one another so as to expose an angular sector that is large enough that the characteristic temperature value or values of the heating profile can be obtained.

6. Method according to any one of the preceding claims, **characterized in that** the preform (10) is rotated with respect to the support member during the determination operation between an initial angular orientation and the random angular orientation.

7. Method according to any one of the preceding claims, **characterized in that** each characteristic temperature value is formed by an extreme of temperature.

8. Device (24) for indexing a preform for implementing the method according to any one of the preceding claims, **characterized in that** it comprises at least one member (28) for supporting a preform (10) and remote temperature measurement means (30).

9. Device (24) according to the preceding claim, **characterized in that** the support member (28) is made to move to allow it to transport the preform (10).

10. Device (24) according to the preceding claim, **characterized in that** the temperature measurement means (30) are fixed with respect to the path of the support member (28).

11. Device (24) according to Claim 9, **characterized in that** the temperature measurement means are able to move, together with the support member.

12. Device (24) according to any one of the preceding claims, **characterized in that** the temperature measurement means comprise a thermal camera (30).
